# EUROPEAN PATENT SPECIFICATION

(11) **EP 4 574 723 B1**
(45) Date of publication and mention of the grant of the patent: **09.09.2026**
(21) Application number: 24221109.2
(22) Date of filing: 18.12.2024
(51) Int. Cl.: B65G 69/00

(54) **VEHICLE BLOCKING DEVICE**
FAHRZEUGBLOCKIERVORRICHTUNG
DISPOSITIF DE BLOCAGE DE VÉHICULE

(30) Priority: 19.12.2023 NL 2036577
(43) Date of publication of application: 25.06.2025
(73) Proprietor: Forco Holding B.V., 8243 PH Lelystad (NL)
(72) Inventor: VAN DE SCHOOTBRUGGE, Hendrik Thiemen, 8243 PH Lelystad (NL)
(74) Representative: Patentwerk B.V.

(56) References cited:
- EP-A1- 3 028 966
- EP-A1- 3 210 892
- WO-A1-2013/136031

## Description

Electronical and manual vehicle blocking devices are well known, and regularly used for blocking at least part, in particular a wheel of a vehicle, such as a truck on a lane in front of a(n) (un)loading deck or (un)loading platform. The vehicle blocking device typically comprises a locking element, such as a locking arm, configured to be positioned against part of the vehicle, to prevent the vehicle from rolling out of its position. The vehicle blocking devices are typically used as a safety measure, to ensure that the vehicle will be retained at the desired spot. The blocking element is typically displaceable between an initial, or unlocked position in which the blocking element extends alongside the lane, and a final, or blocking position, in which the blocking element partially extends above the lane and can be positioned against for example a wheel of the vehicle. There are several embodiments of known vehicle blocking elements which have in common that they often lack a satisfactory ease of use due to having a rather complex configuration and/or that the durability of the system is limited.

A known vehicle blocking device follows from the European patent application EP3210892 A1. This patent application discloses a mechanical device for chocking vehicles that is formed by mechanically-based movement components, and that has at least one guidance system with a discreet structure/carriage positioning and displacement system formed by openings, teeth, interlockings or other positioning and forward movement means, for said positioning and forward movement, and by a structure/carriage which has a movement piece due to the guidance system, which has means that are complementary to the openings, teeth or interlocking of the guidance system, placing them in contact with each other and limiting the free movement to only one direction and automatically blocking it in the other direction, although with a release system that enables unblocking thereof and, therefore, movement in any direction.

Another vehicle blocking device is disclosed in the international patent application WO2013/136031A1. This document discloses a manual wedging device, comprising a frame forming a ground support plane, supporting above and at a distance from this plane a horizontal rectilinear guide rail, on which a support head equipped with a wedge is slidably mounted, which can occupy a retracted position and a blocking position at a distance from the previous one, wherein the rail has a series of cylindrical vertical holes regularly spaced apart along the horizontal sliding axis of the head, and wherein said head is equipped with a guide sleeve slidably engaged on the guide rail, and in that said sleeve is equipped with at least one radial through hole designed to come, by sliding of the head, in axial correspondence with one of the holes of the guide rail and wherein the head is equipped with at least one movable locking finger designed to be engaged in the formed hole alignment, with a view to its immobilization in translation along the guide rail.

It is an object of the present invention to provide a vehicle blocking device wherein the ease of use is more simplified or at least to provide an alternative to the known vehicle blocking devices.

The invention provides thereto a vehicle blocking device, comprising:
- at least one guiding rail;
- at least one displaceable body which is displaceable with respect to the at least one guiding rail; and
- at least one displaceable blocking element configured for blocking at least part of a vehicle, and preferably engaged to the at least one displaceable body;

wherein the at least one guiding rail and the at least one displaceable body respectively comprise at least one first gear rack and at least one second gear rack which are configured for mutual engagement and in particular for mutual engagement and/or interlocking such that the at least one displaceable body can be locked with respect to the at least one guiding rail in at least one position; wherein the device comprises at least one primary actuating element configured to actuate at least one first gear rack and/or at least one second gear rack between:
   ∘ at least one engaging configuration wherein the at least one first gear rack and the at least one second gear rack mutually engage such that the position of the at least one displaceable body is substantially locked with respect to the at least one guiding rail; and
   ∘ at least one distant configuration wherein the at least one first gear rack and the at least one second gear rack are positioned at a distance from each other such that the at least one displaceable body can be displaced with respect to the at least one guiding rail;
and wherein the device comprises at least one secondary actuating element configured to actuate the at least one blocking element between:
   ∘ at least one blocking position, in particular wherein the at least one blocking element extends substantially perpendicular with respect to the guiding rail such that the blocking element can block at least part of a vehicle; and
   ∘ at least one unblocked position;
wherein at least one primary actuating element and at least one secondary actuating element are independently controllable.

The vehicle blocking device according to the present invention has several benefits over conventional vehicle blocking devices. The use of at least one primary actuating element and at least one secondary actuating element which are independently controllable results in more controllability of the positioning of the at least one displaceable body and of the blocking element with respect to the at least one guiding rail. Therefore, an optimal position of the at least one displaceable body and of the blocking element can be achieved in a relatively simple manner. The positioning of the displaceable body with respect to the guiding rail can be determined based upon the position of the vehicle which needs to be blocked or secured in its position. In the device according to the present invention, at least one blocking element is typically connected and/or engaged, to the at least one displaceable body. In this respect "engaged" may also be understood as directly or indirectly engaged, wherein engaged can be understood as contacted, connected, suspended, or held by. Therefore, controlled positioning and/or aligning of the blocking element in at least one blocking position can be effectively achieved by the use of a vehicle blocking device according to the present invention. Vehicle blocking devices according to the prior art are typically configured such that displacement of the blocking element from the unblocked position to a blocking position simultaneously causes locking of the displaceable body with respect to the guiding rail. The blocking element then forms part of the overall locking configuration. A drawback of such configuration is that the freedom of positioning of the displaceable body and thus of the blocking element connected thereto with respect to the guiding rail is typically rather limited due to the guiding rail, the displaceable body and the blocking element all need to be aligned with respect to each other before the securing of said components can take place. To align the at least three components of the vehicle blocking device in a single action negatively affects the ease of use and limits the degree of freedom.

Due to the at least one guiding rail and the at least one displaceable body respectively comprising at least one first gear rack and at least one second gear rack locking of the at least one displaceable body with respect to the at least one guide rail can be achieved in a reliable and repeatable manner. The at least one first gear rack and at least one second gear rack being configured for mutual engagement and/or interlocking enables an effective co-action between the at least one displaceable body and the at least one guiding rail. The at least one primary actuating element is configured to actuate at least one first gear rack and/or at least one second gear rack between at least one engaging configuration and at least one distant configuration which facilitates the co-action between the gear racks in a controlled manner. The at least one primary actuating element is in particular configured to actuate at least one first gear rack and/or at least one second gear rack between at least one engaging configuration and at least one distant configuration, and vice versa. The first and second gear rack are preferably at least partially formed as substantially complementary gear racks.

The vehicle blocking device according to the present invention can also be referred to as trailer blocking device, trailer restricting device, vehicle retaining device and/or combination thereof. The goal of the device according to the present invention is to provide a temporary blocking function for at least part of at least one vehicle, in particular a vehicle positioned in a loading dock. The blocking element is typically configured to be positioned against a wheel of a vehicle. The dimensions of the device are therefore scaled to this specific use.

At least one guiding rail according to the present invention is in particular a substantially elongated guiding rail. At least one guiding rail of the vehicle blocking device is during use typically positioned adjacent to a driveway or lane for a vehicle, for example a driveway of a vehicle docking. The length direction of the at least one guiding rail is thereby typically in line with and/or extends in the drive direction of the vehicle. The at least one guiding rail is in particular a substantially rigid guiding rail. The at least one guiding rail can for example be substantially made of a metal. The at least one guiding rail can for example be configured to be anchored to the fixed world.

At least one displaceable body is in particular configured to be displaced with respect to the at least one guiding rail. Within the context of the present invention, the body, or displaceable body, can also be referred to as housing, carriage or wagon. The at least one displaceable body is typically displaceably connected to the at least one guiding rail. At least one displaceable body can for example be at least partially made of a metal. This will positively contribute to the strength and loadability of the body and/or to the durability thereof.

At least one displaceable blocking element is in particular configured for blocking at least part of a vehicle. At least one blocking element can for example be configured to be positioned against a wheel or wheel part of a vehicle, in particular such that the blocking element can block or secure at least part of the vehicle. At least one blocking element is in particular attached to the least one displaceable body. It is in particular preferred that at least one blocking element is movably, or displaceably, attached to the least one displaceable body. This means that at least one blocking element can be displaced with respect to the displaceable body. At least one blocking element is preferably at least displaceable with respect to the at least one displaceable body at least between at least one blocking position and at least one unblocked position. When it is referred to a blocking element, also a blocking arm could be meant. At least one blocking element is preferably substantially elongated. At least part of at least one blocking element is preferably substantially rigid such that the at least one blocking element can withstand forced applied to it by at least part of a vehicle.

In a possible embodiment, at least one first gear rack and/or at least one second gear rack are configured to linearly, or non-linearly, displace between at least one engaging configuration and at least one distant configuration. The mutual displacement between at least one first gear rack and at least one second gear rack is preferably a linear displacement. A linear displacement can be performed in a controlled manner which is beneficial for the mutual alignment of the gear racks. A non-linear displacement, for example a stepwise displacement, may contribute to a prudent transition of configuration between the at least one engaging configuration and the at least one distant configuration, and vice versa. The first and second gear racks according to the present invention benefit of the possibility that a mutual interlocking configuration can be obtained. Applying an embodiment wherein at least one first gear rack and/or at least one second gear rack are configured to linearly, or non-linearly, displace between at least one engaging configuration and at least one distant configuration enables that the mutual engagement and/or interlocking can be facilitated in an effective way. Aligning of the mutual position of the first and second gear rack to an engaging configuration will be relatively simple, as the linear displacement with cause self-guidance of the gear racks resulting in mutual interaction. It is for example imaginable that at least one first gear rack and at least one second gear rack are each configured to linearly displace. It is also possible that at least one of the at least one first gear rack and the at least one second gear rack is stationary and that the other gear rack is configured to linearly displace. It is for example possible that at least one first gear rack is stationary positioned within the device and that at least one second gear rack is linearly displaceable towards and away from said first gear rack.

In a beneficial embodiment, the at least one displaceable body can be locked with respect to the at least one guiding rail at least in a horizontal direction. Preferably, the at least one displaceable body can be locked with respect to the at least one guiding rail in a horizontal and/or vertical direction of locking. It is for example imaginable that at least one first gear rack and/or at least one second gear rack are configured for engaging and/or interlocking in a substantially horizontal direction. At least one first gear rack and/or at least one second gear rack can be configured for linear displacement in a substantially horizontal direction between at least one engaging configuration and at least one distant configuration. At least one first gear rack and/or at least one second gear rack can also be configured for linear displacement in a substantially vertical direction between at least one engaging configuration and at least one distant configuration. In a particular embodiment, it is conceivable that at least one second gear rack can be configured for a, preferably linear, curved displacement, for example via a concave or convex displacement. It is also imaginable that the device is configured such that activation of the at least one primary actuating element causes a mutual substantially linear displacement between at least one first gear rack and/or at least one second gear rack between at least one engaging configuration and at least one distant configuration, or vice versa. Linear displacement of at least one first gear rack and/or at least one second gear rack enables co-action between said gear racks in an effective and reliable manner.

At least one first gear rack and/or at least one second gear rack preferably extend in a substantially horizontal orientation in at least one engaging configuration and/or in at least one distant configuration. Preferably, at least one first gear rack and at least one second gear rack extend in a substantially horizontal orientation in all configurations. It is beneficial if at least one first gear rack and/or at least one second gear rack stay in substantially the same plane during displacing between at least one engaging configuration and at least one distant configuration. This is beneficial from energetic point of view and may reduce the risk of misalignment.

The at least one guiding rail is in particular substantially elongated. The at least one guiding rail further typically defines an upper side and a lower side. At least one first gear rack is preferably located at a lower side of the at least one guiding rail. It is for example imaginable that at least one first gear rack extends over at least part of the guiding rail. Preferably, at least one first gear rack extends over at least 50%, preferably at least 60% and more preferably at least 70% of the length of the at least one guiding rail. At least one first gear rack is preferably substantially enclosed by at least part of the at least one guiding rail. It is for example possible that at least one first gear rack is positioned at an inner and/or bottom part of the at least one guiding rail. The guiding rail thereby preferably forms a protective function for at least one first gear rack.

The at least one displaceable body typically also defines an upper side and a lower side. It is beneficial if at least one second gear rack is located at a lower side or a lower part of the at least one displaceable body. In this way at least one first gear rack and at least one second gear rack can be positioned away from the upper side and/or outer surface of the device. It is preferred that at least one first and/or second gear rack is substantially positioned within the interior of the vehicle blocking device. It is for example possible that at least one second gear rack is substantially enclosed by at least part of the at least one displaceable body. It is for example possible that at least one second gear rack is located within the interior of the at least one displaceable body. In this embodiment, the at least one second gear rack is substantially shielded from the environment. The at least one displaceable body can thereby fulfill a protective function for at least one second gear rack.

It is also possible that the at least one displaceable body at least partially encloses the at least one guiding rail. The co-action between the at least one displaceable body and the at least one guiding rail can be further optimized in such configuration. The at least one displaceable body is preferably configured to slide over the at least one guiding rail. It is for example possible that an upper side of the at least one guiding rail had a closed configuration. It is preferred that at least the upper surface, and preferably at least two side surfaces of the at least one guiding rail is substantially closed and/or formed by a solid plane. The at least one guiding rail can be substantially hollow. At least part of at least one first gear rack can be received within the body of the at least one guiding rail. It is also imaginable that at least part of the at least one displaceable body is received within the guiding rail, preferably in a lower part of the guiding rail.

In a possible embodiment of the vehicle blocking device according to the present invention, at least one primary actuating element is a manually actuatable actuating element. It is preferred that at least one primary actuating element is manually actuatable by a user, preferably by means of at least one of the limbs of the user, more preferably by at least one feet of the user. At least one primary actuating element is preferably positioned such that it can be actuated by a feet of the user. At least one primary actuating element can for example be configured to be pressed by a user such that displacement of least one first gear rack and/or at least one second gear rack between at least one engaging configuration and at least one distant configuration, or vice versa, is initiated. The use of a manually actuatable actuating element results in a relatively simple and easy to use configuration. In an alternative embodiment, it is imaginable that at least one primary actuating element is an electrically controllable actuating element. At least one primary actuating element preferably forms part of the at least one displaceable body. It is also possible that at least one displaceable body comprises at least one primary actuating element.

At least one primary actuating element may be configured to displace at least one first gear rack and/or at least one second gear rack in a substantially linear manner. At least one primary actuating element may also comprise at least one drive which is configured to displace at least one first gear rack and/or at least one second gear rack in a substantially linear manner. It is for example imaginable that pushing and/or pulling of at least part of at least one primary actuating element causes a linear displacement of at least one first gear rack and/or at least one second gear rack. Possibly, at least one primary actuating element comprises at least one actuating member which is pivotably connected to at least one second gear rack. In this manner, pivoting of the at least one actuating member can cause a linear movement of the at least one second gear rack. It is for example possible that at least part of the actuating member is formed by a pedal. It is also possible that at least part of at least one actuating member forms a pedal. Hence, it is possible that activating of the at least one primary actuating element via a pivoting displacement of at least one actuating member causes a linear displacement of at least one second gear rack such that at least one first gear rack and at least one second gear rack are urged into at least one engaging configuration. The latter may be facilitated via at least one drive. It is for example possible that mechanical actuation of at least one primary actuating element actuates at least one drive, for example a solenoid, which enables the linear movement of at least one first gear rack and/or at least one second gear rack. At least one drive, or solenoid, could be applied to facilitate controlled linear movement of the at least one first gear rack and/or at least one second gear rack.

In a possible element, the vehicle blocking device comprises at least one locking member configured to lock at least one first gear rack and/or at least one second gear rack in at least one engaging configuration. It is imaginable that actuating of at least one primary actuating element causes displacement of at least one first gear rack and/or at least one second gear rack such that a relevant position of said gear racks is achieved. At least one locking member can ensure that the at least one first gear rack and/or the at least one second gear rack are retained in the desired position, in particular the engaging configuration. It is imaginable that at least one locking member is configured to lock at least one first gear rack and/or at least one second gear rack such that at least one primary actuating element, and in particular at least one pedal thereof, is blocked. Within the context of the present invention, at least one locking member can also be referred to as at least one retaining member. Possibly, the vehicle blocking device, and in particular at least one primary actuating element, comprises at least one drive, preferably at least one solenoid, configured to activate and/or deactivate at least one locking member, at least one pedal, and/or at least one primary actuating element. Possibly, at least one locking member is a spring actuatable locking member. It is also imaginable that at least one locking member comprises at least one spring. It is also possible that at least one locking member is connected to at least one second gear rack for example via at least one spring element, in particular at least one tensioning spring. The at least one spring can provide a retaining function. It is imaginable that the force applied the at least one spring can be overcome by a user. Hence, it is possible that at least one locking member, and thus the position of at least one first gear rack and at least one second gear rack is retained in at least one engaging configuration due to the retaining force of the at least one spring.

The vehicle blocking device according to the present invention may comprise least one unlocking member configured to unlock or undo at least one first gear rack and at least one second gear rack from at least one engaging configuration into at least one distant configuration. Possibly, at least one unlocking member is connected to at least one second gear rack. Possibly, the vehicle blocking device, and in particular at least one primary actuating element, comprises at least one drive, preferably at least one solenoid, configured activate and/or deactivate at least one unlocking member, at least one pedal, and/or at least one primary actuating element. At least one unlocking member may be a spring actuatable locking member. It is also imaginable that at least one unlocking member comprises at least one spring and/or that at least one locking member is connected to at least one second gear rack via at least one spring element, in particular at least one tensioning spring. Within the context of the present invention, at least one unlocking member can also be referred to as at least one releasing member. At least one actuating member, if applied, can be formed by at least one locking member and/or at least one unlocking member. It is imaginable that at least one unlocking member is configured to overcome the retaining force of the at least one spring when at least one first gear rack and at least one second gear rack are retained in at least one engaging configuration such that the at least one gear rack and the at least one second gear rack will be released into at least one distant configuration.

In a further possible embodiment, the vehicle blocking device comprises at least one primary actuating element comprising at least one locking member and/or at least one unlocking member. In this embodiment, effective locking and unlocking of the at least one displaceable body with respect to the at least one guiding rail can be achieved. Possibly, at least one primary actuating element comprises at least one pedal. At least one pedal may be configured for co-action with at least one locking member and/or at least one unlocking member. It is also imaginable that at least one locking member and/or at least one unlocking member comprises at least one pedal. It is for example conceivable that at least one primary actuating element comprising at least two pedals, wherein a locking pedal is configured to activate at least one locking member and wherein at least one unlocking pedal is configured to activate at least one unlocking member. It possible that at least one locking member and at least one unlocking member are each connected, preferably pivotably connected, to the at least one second gear rack. The at least one locking member can be configured to temporarily lock or retain the at least one first gear rack and/or at least one second gear rack in at least one engaging configuration wherein the at least one first gear rack and the at least one second gear rack mutually engage such that the position of the at least one displaceable body is substantially locked with respect to the at least one guiding rail and the at least one unlocking member can be configured to release the temporarily locking or retaining of the at least one first gear rack by the at least one locking member such that the at least one first gear rack and the at least one second gear rack are urged to at least one distant configuration wherein the at least one first gear rack and the at least one second gear rack are positioned at a distance from each other such that the at least one displaceable body can be displaced with respect to the at least one guiding rail.

The vehicle blocking device, and preferably the at least one displaceable body, in particular at least one primary actuating element may also comprise at least one retainer configured to retain at least part of the at least one primary actuating element, preferably the unlocking pedal and/or the locking pedal, in a non-movable position during the engaging configuration of the first gear rack and second gear rack. At least one retainer can be an electronically actuatable retainer. The vehicle blocking device, and in particular at least one primary actuating element may comprise at least one drive, in particular at least one solenoid, to activate and/or deactivate at least one retainer. It is for example conceivable that the at least one drive and/or the at least one retainer comprises at least one locking pin configured to engage the at least one second gear rack. At least one retainer may also be formed by at least one locking pin and/or at least one protruding element. The at least one drive and/or retainer may prevent actuating of the at least one primary actuating element, in particular the at least one unlocking pedal, by the user during the engaging configuration. This may contribute to the safety of the vehicle blocking device. In a particular embodiment, the at least one control unit, if applied, may be configured to control the at least one drive and therefore at least one retainer such that said drive may release the at least one second gear rack and in particular thus the primary actuating element. This allows the primary actuating element to be actuated again by the user. It is conceivable that the at least one first gear rack and/or the at least one second gear rack comprise(s) at least one, preferably complementary, receiving space configured to receive at least a portion of the at least one retainer.

In another embodiment, the at least one retainer is at least partially arranged on the at least one first gear rack and/or the at least one second gear rack. It is conceivable that the at least one the vehicle blocking device, preferably the at least one displaceable body, more preferably the at least one primary actuating element comprises at least one receiving space configured to receive at least a portion of the at least one retainer.

It is imaginable that at least one primary actuating element, and in particular at least one locking member, comprises at least one carrier element configured to lower and/or lift at least part of the at least one displaceable body upon actuating at least one first gear rack and at least one second gear rack into at least one engaging configuration. Hence, it is imaginable that at least one carrier element is configured to keep the at least one displaceable body in a substantially lowered configuration when at least one first gear rack and at least one second gear rack are in at least one engaging configuration. In this way, contact between the at least one displaceable body and the at least one guiding rail is achieved, preventing high loads on the rollers. The at least one carrier element comprises preferably at least one contact area for engaging and/or supporting at least part of the at least one displaceable body and/or the at least one guiding rail at least during the at least one locked configuration. It is possible that the at least one carrier element comprises a substantially complementary contact area configured to be in contact with at least part of at least one contact area of the at least one displaceable body and/or the at least one guiding rail. In another embodiment, it is thinkable that at least one carrier element is configured to keep the at least one displaceable body in a substantially lifted configuration when at least one first gear rack and at least one second gear rack are in at least one engaging configuration.

In a preferred embodiment, the at least one displaceable body comprises at least one roller, preferably a pair of rollers, for displacing the at least one displaceable body with respect to the at least one guiding rail. At least one roller, or at least one pair of rollers is preferably configured for displacing the at least one displaceable body over the at least one guiding rail. The use of at least one pair of rollers can enable a more smooth and/or controlled displacement of the at least one displaceable body with respect to the at least one guiding rail. The at least one displaceable body could also comprise at least one first roller, preferably at least one first pair of rollers, and at least one second roller, preferably at least one second pair of rollers. A more stable configuration could be obtained with such embodiment. It is possible that at least two rollers are mutually connected via a bridge member, or an axis. This could provide a more stable configuration. In a preferred embodiment, at least one pair of rollers is retractably connected to the at least one displaceable body. It is also possible that at least one roller, preferably at least one pair of rollers, is resiliently connected to the at least one displaceable body. It is for example possible that at least one pair of rollers can be at least partially lifted, or retracted, by at least one carrier element, if applied. It is also conceivable that at least one pair of rollers will be at least partially lifted and/or retracted with respect to the at least one guiding rail when an external force is applied to the at least one displaceable body. It is for example imaginable that the at least one displaceable body comprises at least one deflection element configured to retract, or lift, at least part of at least one roller, preferably at least one pair of rollers and/or to retract, or lift, at least part of the at least one displaceable body when applied to a force. Yet in another preferred embodiment, the at least one displaceable body comprises at least one deflection element configured to lower at least part of the at least displaceable body when a force is applied to the at least one deflection element. At least one deflection element can for example be configured release the contact between at least part of at least one roller, preferably at least one pair of rollers and the at least one guiding rail, in case a substantially vertical force is applied (directly or indirectly) to the at least one deflection element. Lifting and/or retracting of at least one roller, preferably at least one pair of rollers and/or lowering at least part of the at least one displaceable body is preferably done such that the contact area between the rollers and the at least one guiding rail is reduced and/or such that the force applied to the rollers is reduced and/or such that a contact between the at least one displaceable body and the at least one guiding rail is obtained. The deflection element can also be configured to position the roller(s) for example of at least one pair of rollers at a distance from the at least one guiding rail. Wear and/or mechanical overload of the at least one (pair of) rollers can be prevented with such embodiment. It is imaginable that at least one roller, preferably at least one pair of rollers is resiliently connected to the at least one displaceable body. This can positively contribute to the ability to lift and/or retract at least part of the rollers with respect to the at least one guiding rail. The roller(s) can for example also be referred to as bearing(s). At least one roller may also comprise at least one bearing. **In** another preferred embodiment, the at least one carrier element, if applied, is configured to keep the at least one displaceable body in a substantially lowered configuration when at least one first gear rack and at least one second gear rack are in at least one engaging configuration. In this way, the at least one roller may not be retractably and/or resiliently connected to the at least one displaceable body. The wear and/or mechanical overload on the at least one roller, preferably at least one pair of rollers, may be reduced or even prevented due to the at least one displaceable body that is abutting the at least one guiding rail in a blocking position. It is, however, conceivable that in said embodiment the at least one roller may be retractably and/or resiliently connected to the at least one displaceable body.

In a further beneficial embodiment, at least one primary actuating element, and in particular at least one locking member or actuating member if applied, comprises at least one carrier element configured to lift at least part of the at least one displaceable body upon actuating at least one first gear rack and at least one second gear rack into at least one engaging configuration. In this embodiment, the friction between the at least one displaceable body and the at least one guiding rail can be minimized when the first and second gear racks are in the engaging configuration. This is beneficial for the durability of the system. Further it can be prevented that friction between the at least one displaceable body and the at least one guiding rail negatively affects the engaging configuration between the first and second gear rack. It is for example imaginable that at least part of at least one pair of rollers is lifted by the at least one carrier element. At least one carrier element, if applied, can be configured to lift at least one pair of rollers of the at least one displaceable body upon actuating at least one first gear rack and at least one second gear rack into at least one engaging configuration, in particular such that at least part of the at least one pair of rollers is positioned at a distance from the upper surface of the at least one guiding rail. When it is referred to a lifting action, a substantially vertical displacement is meant.

In another embodiment, at least one primary actuating element, and in particular at least one locking member or actuating member, if applied, comprises at least one carrier element configured to lower at least part of the at least one displaceable body upon actuating at least one first gear rack and at least one second gear rack into at least one engaging configuration. In this embodiment, the friction between the at least one displaceable body and the at least one guiding rail may increase when the first and second gear racks are in the engaging configuration. This is beneficial for the robustness of the engaging configuration of the system.

Preferably, at least one first gear rack and/or at least one second gear rack comprises a plurality of teeth. In a further preferred embodiment, at least one side of at least one teeth, preferably of multiple teeth and more preferably all teeth comprises a substantially beveled shape. At least part of the teeth of at least one first gear rack and/or at least one second gear rack can have an asymmetrical profile. The use of an asymmetrical profile, for example via a beveled or chamfered configuration or shape, can positively contribute to the ease of mutual alignment of the first gear rack and the second gear rack. Further, the use of such beveled teeth configuration can prevent shearing and would be more capable of absorbing (external) forces compared to a symmetrical, substantially straight teeth configuration.

The vehicle blocking device according to the present invention benefits of being comprising at least one primary actuating element and at least one secondary actuating element which are independently controllable. As indicated above, this results in a large flexibility of the positioning of the at least one displaceable body with respect to the at least one guiding rail. At least one blocking element is in particular, directly or indirectly, connected, in particular movably connected, to the at least one displaceable body. At least one blocking element is preferably movably connected to the at least one displaceable body, such that the at least one blocking element is at least one movable into a position wherein the at least one blocking element extends substantially perpendicular to a longitudinal direction of the at least one guiding rail. In another configuration, the at least one blocking element could be substantially parallel to a longitudinal direction of the at least one guiding rail. It is also conceivable that the at least one blocking element can extends in a direction opposite to the blocking direction.

At least one secondary actuating element is a manually actuatable actuating element. At least one secondary actuating element is in particular manually actuatable by a user, preferably by means of at least one of the limbs of the user, more preferably at least one hand of the user. In a further beneficial embodiment, at least one secondary actuating element may comprise at least one handle or handle bar. The use of a handle or handle bar may further contribute to the ease of use of the vehicle blocking device. The at least one handle can for example be positioned at height wherein a person standing next to the device can grip the handle. This is also beneficial from ergonomic point of view. The secondary actuating element, and in particular the handle, could also be applied to displace the at least one displaceable body with respect to the at least one guiding rail. It is for example imaginable that the user displaces the displaceable body manually via the at least one handle until the displaceable body, and thus the blocking element, reaches a desired position. The at least one displaceable body can then be locked with respect to the at least one guiding rail via activation or actuation of the at least one actuation element. The latter is preferably performed by a user using its feet. When the displaceable body is locked in the preferred position, the user can position the blocking element in a blocking position via the handle of the at least one secondary actuating element. It is also conceivable that the at least one displaceable body is locked in the preferred position after that the blocking element is positioned in a blocking position,

At least one blocking element is preferably directly or indirectly connected to the at least one displaceable body. In a further preferred embodiment, at least one blocking element is rotatably connected and/or engaged to the at least one displaceable body. A rotational displacement of at least one blocking element is easily controllable. A further benefit of this embodiment is that the at least one blocking element will not affect the width of the system when said blocking element is in the unblocked position. A further benefit thereof is that said blocking element won't interfere with the pathway next to the at least one guiding rail. Preferably the device is configured such that at least a 90 degrees rotatable displacement of the at least one blocking element can be achieved. It is also achievable that at least part of at least one blocking element can be moved in a vertically and/or horizontal plane. Alternatively, at least one blocking element can be telescopically extendable. Such embodiment can for example benefit of a relatively compact retraced position. The device could further comprise at least one locking member configured to lock the at least one blocking element at least in the blocking position. It is also imaginable that at least one locking member is configured to lock the at least one blocking element in at least one locking position and in at least one unblocked position.

The device may further comprise at least one sensor, for example for determining and/or indicating the position of the at least one blocking element. It is also possible that at least one sensor is configured to determine if the at least one displaceable body is in the at least one locked configuration and/or if the at least one displaceable body is in the at least one unlocked configuration. It is also conceivable that the at least one sensor is configured to determine the presence of a part of a vehicle, in particular a wheel of the vehicle. This allows to indicate when a distance between the blocking element and the vehicle, in particular the wheel of the vehicle, allows a correct positioning of the vehicle blocking device. This contributes to a safe blocking situation. The device could also comprises at least one control unit. At least one control unit can for example be configured to control at least one sensor and/or at least one drive, in particular at least one solenoid. The device according to the present invention can also be coupled with a control system of the loading dock, which is for example configured to indicate if the loading dock is free or occupied and/or if a loading door is closed or opened.

Optionally, the at least one displaceable body can be provided with at least one guiding member for guiding the at least one displaceable body with respect to the at least one guiding rail. The use of at least one guiding member could improve the co-action between the at least one displaceable body and the at least one guiding rail. The at least one guiding rail and/or the at least one displaceable body may comprise at least one friction element configured for decreasing friction between the at least one guiding rail and/or the at least one displaceable body, in particular during displacement of the at least one displaceable body with respect to the at least one guiding rail. This is in particular useful if at least part of the displaceable body and at least part of the guiding rail are made of metal and in case metal-metal contact between said components cannot be prevented. At least one friction element can for example be made of a plastic material. The use of at least one friction element can further optimize the durability of the device.

Optionally, the displaceable body may further comprise at least one removal member. Said removal member can be formed by at least one, preferably multiple, brushes, brooms, sweepers or scraping elements, such as a plate formed scraping element. The removal member is preferably mounted to a side of the displaceable body, in particular a rear side of the displaceable body and/or a front side of the displaceable body, facing towards the guiding rail. The removal member is in particular at least partially mounted to the displaceable body such that the removal member at least partially circumferentially extends with respect to the guiding rail, preferably with respect to an upper side and/or a lower side and/or a sideward side of the guiding rail. The removal member can at least partially extend substantially parallel to the guiding rail. At least a part, preferable an end part, of the substantial parallel extending part of the removal member is typically bevelled shaped, in particular with respect to a drive direction of the displaceable body. This allows that dirt can be easily removed sidewards from the guiding rail. The removal member can be at least partially made from plastic, such as PVC. The removal member allows to remove dirt, like dust, sand or mud, from the guiding rail. This may prevent the dirt to enter the displaceable body, such that damages to the roller, such as a bearing, and/or the interior of the displaceable body can be prevented. This allows to protect the displaceable body and the roller such that the life time of the displaceable body and the roller may increase.

It is also conceivable that the displaceable body is provided with at least one visibility light configured for providing light during actuation of the at least one blocking element between at least one blocking position and at least one unblocked position. The visibility light may be controlled by a, preferably the aforementioned, control unit. The visibility light contributes to increase the visibility of the vehicle blocking device during actuation of the blocking element, such that an operator may clearly see the object, in particular the part of the vehicle, to be blocked. Typically, the displaceable body further comprises at least one, preferably at least two, status light for indicating a status of the vehicle blocking device towards a user, such as a vehicle driver, in particular for indicating:
- when the vehicle blocking device is blocked such that driving with the blocked vehicle is not allowed, and/or
- when the vehicle blocking device, in particular the blocking element , is in an unblocked position, such that a vehicle can park near the dock, and/or
- when a user can actuate the blocking element from a blocked position to a unblocked position such that the vehicle can be driven away from a dock.

Said vehicle status light indicator contributes to the ease of use, time efficiency of the vehicle blocking device.

The vehicle blocking device according to the present invention could optionally comprise multiple displaceable bodies which co-action with the same guiding rail. The flexible character of the device according to the present invention enables that multiple displaceable bodies could be applied would not negatively affect each other.

The invention will be further elucidated by means of non-limiting exemplary embodiments illustrated in the following figures, in which:
- figures 1a and 1b show a schematic representation of a possible embodiment of a vehicle blocking device according to the present invention;
- figure 2a-2c show detailed parts of a displaceable body of a device according to the present invention; and
- figure 3 shows a cross sectional view of a vehicle blocking device according to the present invention,
- figure 4 depicts a schematic representation of a possible embodiment of a vehicle blocking device according to the present invention.

Within these figures, similar reference numbers correspond to similar or equivalent elements or features.

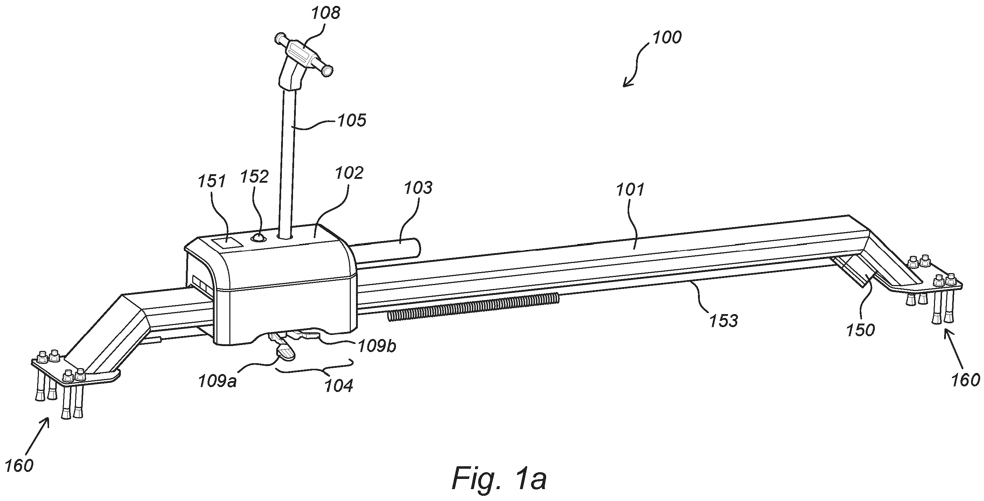

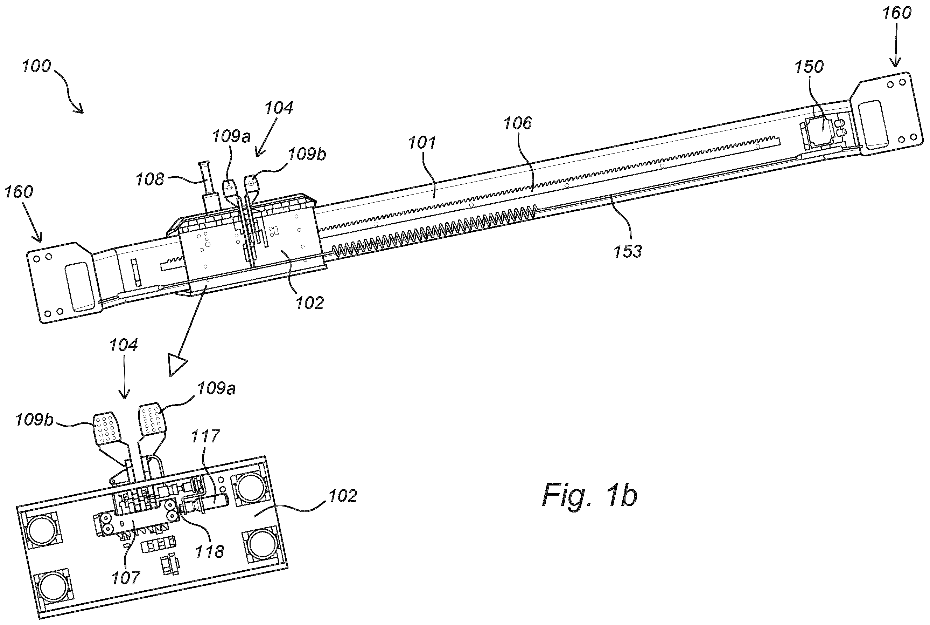

Figures 1a and 1b show a schematic representation of a possible embodiment of a vehicle blocking device 100 according to the present invention. Figure 1a shows a perspective view whereas figure 1b shows a bottom view of the device 100. The device 100 comprises thereto a guiding rail 101, a displaceable body 102 and a displaceable blocking element 103. The guiding rail 101 is substantially elongated and the displaceable body 102 is displaceable with respect to the guiding rail 101. The displaceable blocking element 103 is configured for blocking at least part of a vehicle (not shown). In the shown configuration, the blocking element 103 is displaceable via a secondary actuating element 105. The secondary actuating element 105 is configured to actuate or displace the blocking element between at least one blocking position wherein the at least one blocking element 103 extends substantially perpendicular with respect to the guiding rail 101 such that the blocking element 103 can block at least part of a vehicle and at least one unblocked position wherein the pathway is left free for said vehicle. In figures 1a and 1b, the blocking element 103 is in an unblocked position. In the shown embodiment, the guiding rail 101 and the displaceable body 102 respectively comprise at least one first gear rack 106 and at least one second gear rack 107 which are configured for mutual engagement and in particular for mutual engagement and/or interlocking such that the displaceable body 102 can be locked with respect to the guiding rail 101 in at least one position. Figure 1b shows a detailed view of part of the interior of the displaceable body 102 from a top side, such that the second gear rack 107 is visible. Basically, the second gear rack 107 is substantially enclosed by at least part of the displaceable body 102. The vehicle blocking device 100 further comprises a primary actuating element 104. In the shown embodiment, the primary actuating element 104 is configured to actuate the first gear rack 106 and/or the second gear rack 107 between at least one engaging configuration wherein the gear rack 106 and the second gear rack 107 mutually engage such that the position of the displaceable body 102 is substantially locked with respect to the guiding rail 101 and at least one distant configuration wherein the first gear rack 106 and the second gear rack 107 are positioned at a distance from each other such that the displaceable body 102 can be displaced with respect to the guiding rail 101. In the shown embodiment, the primary actuating element 104 is configured to displace the second gear rack 107. The primary gear rack 106 is substantially stationary mounted to a lower side of the guiding rail 101. The primary actuating element 104 and the secondary actuating element 105 are independently controllable such that the displaceable body 102 can be independently displaced over the guiding rail 101 and locked with respect to the guiding rail 101 without affecting the position of the blocking element 103. In the shown embodiment, the displaceable body 102 at least partially encloses the guiding rail 101. Both the primary actuating element 104 and the secondary actuating element 105 are manually actuatable actuating elements 104, 105. The secondary actuating element 105 comprises a handle 108. The handle 108 is positioned such that it is easy to grip by a user operating the device 100. The primary actuating element 104 comprises two pedals 109a, 109b, wherein a locking pedal 109a is configured to lock the displaceable body 102 with respect to the guiding rail 101 and wherein the unlocking pedal 109b is configured to unlock the displaceable body 102 with respect to the guiding rail 101. As can be seen in the figures, the first gear rack 106 and the second gear rack 107 each comprise a plurality of teeth which have an asymmetric profile. A side of the teeth of each gear rack 106, 107 comprises a beveled shape. The first gear rack 106 and the second gear 107 are substantially complementary. The second gear rack 107 is connected to a drive or solenoid 117. The drive or solenoid 117 is configured to activate and deactivate a retainer 118 configured to retain the second gear rack 107, and therewith at least part of the primary actuating element 104, and in particular the pedals 109a, 109b thereof. In the retained configuration, the primary actuating element 104, in particular the pedals 109a, 109b thereof, is in a non-movable position whilst the at least one first gear rack 106 and the at least one second gear rack 107 are in the engaging configuration. The retainer 118 thereto preferably comprises at least one pin 118 configured to co-act with the at least one second gear rack 107. The drive or solenoid 117 is configured to retain the retainer 118 with respect to the second gear rack 107 such that actuating of the unlocking pedal 109b by the user is prevented. The drive or solenoid 117 in combination with the retainer 118, therefore, contributes to the safety of the vehicle blocking device 100. The at least one control unit 150 may be configured to control the drive or solenoid 117 such that the drive or solenoid 117 releases the co-action between the at least one retainer 118 and the at least one second gear rack 107. This allows the primary actuating element 104 to be actuated again by the user. The device 100 as shown further comprises a control unit 150 for controlling part of the electronics of the device, for example sensor(s) 151 and/or indicator lights 152. The control unit 150 and further electronical element are preferably coupled via cabling 153, in the shown embodiment using a spring connection. It is also imaginable that the control unit is an external control unit. The guiding rail 101 is configured to be anchored to the fixed world by fixing means 160.

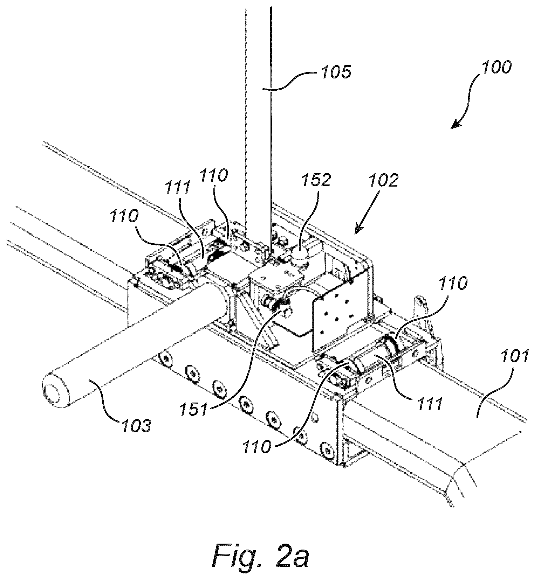

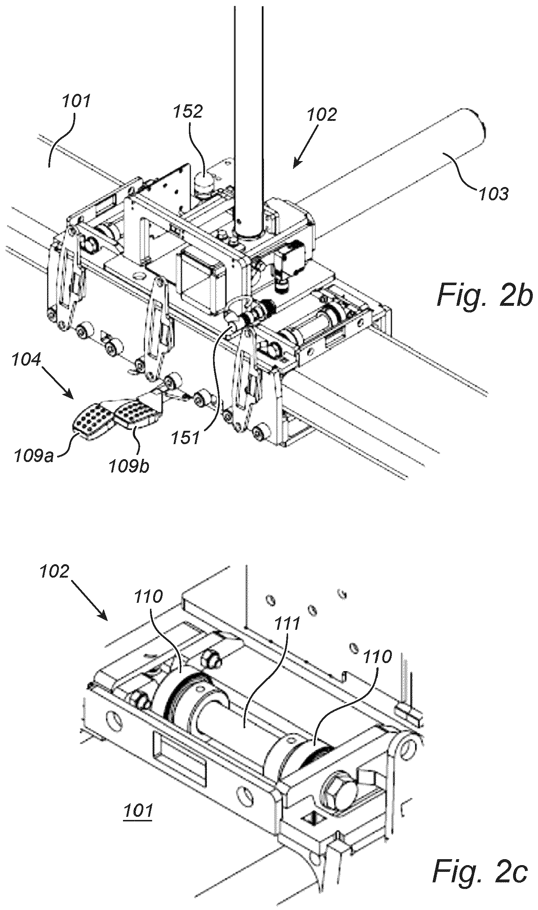

Figures 2a-2c show detailed parts of a displaceable body 102 of a device according to the present invention. The figures show in particular detailed views of the embodiment of the vehicle blocking device 100 as shown in figures 1a and 1b. The figures thereby focus on an upper side of the device 100 and in particular of the displaceable body 102. In the shown embodiments, the blocking element 103 is in a blocked position. The blocking element 103 extends substantially perpendicular with respect to the elongated guiding rail 101. As is shown in the figures, the secondary actuating element 105 is connected to the blocking element 103. The blocking element 103 is rotatably connected to the displaceable body 102. The locking pedal 109a are unlocking pedal 109b extend in a direction opposing the direction in which the blocking element 103 extends in the substantially perpendicular blocking position. This enables easy use of the primary actuating element 104. The displaceable body 102 as shown further comprises two pairs of rollers 110 for displacing the displaceable body 103 with respect to the guiding rail 101. The rollers 110 of each pair are mutually connected via a bridge member 111. The bridge member 111 basically forms an axis between the adjacent rollers 110. Possibly, at least one pair of rollers 110, and preferably each pair of rollers 110, is retractably connected to the displaceable body 102. The displaceable body 102 further comprises friction elements 116 configured for decreasing friction between the guiding rail 101 and the displaceable body 102, in particular during displacement of the latter.

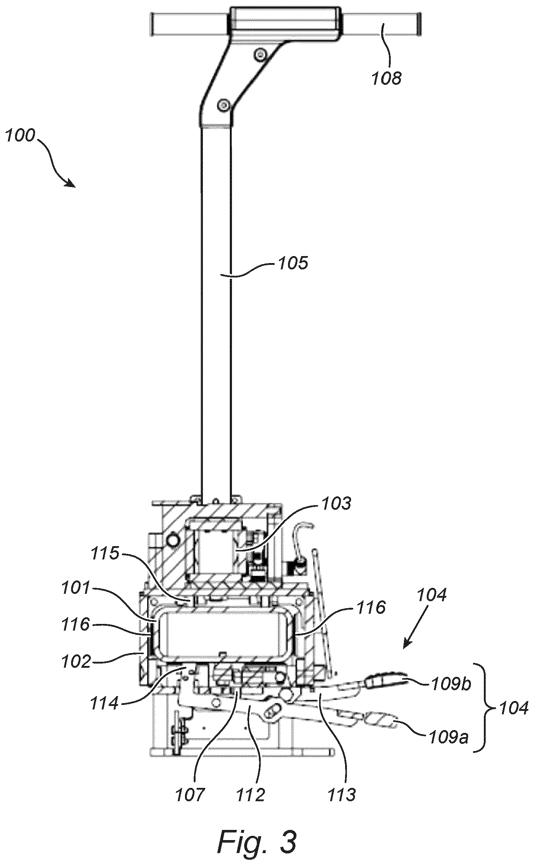

Figure 3 shows a cross sectional view of the vehicle blocking device 100 according to the present invention, and in particular as shown in figures 1a-2c. It can be seen that the displaceable body 102 substantially encloses the guiding rail 101. The primary actuating element 104, and in particular the pedals 109a, 109b thereof, is/are configured to displace the second gear rack 107 in a substantially linear manner towards and from the substantially stationary first gear rack (not shown in this cross section). The device 100, and in particular the first actuating element 104, comprises a locking member 112 configured to lock the first and second gear racks 106, 107 in at least one engaging configuration. The locking member 112 is preferably a spring actuatable locking member. The device 100, and in particular the first actuating element 104, also comprises an unlocking member 113 configured to unlock the first and second gear racks 106, 107 from at least one engaging configuration into at least one distant configuration. The unlocking member 113 can also be a spring actuatable locking member 113. In the shown embodiment, the locking member 112 and unlocking member 113 are pivotably connected to second gear rack 107. Pivoting, or pushing down, of respectively the locking pedal 109a or unlocking pedal 109b, will cause a pivoting movement of respectively the locking member 112 or the unlocking member 113 such that the second gear rack 107 will be linearly displaced to or away from the first gear rack 106. The first gear rack 106 and the second gear rack 107 extend in a substantially horizontal orientation in all configurations. The second gear rack 107 is thereby configured for linear displacement in a substantially horizontal direction between at least one engaging configuration and at least one distant configuration. The primary actuating element 104, and in particular the locking member 112, comprises a carrier element 114 configured to lower at least part of the displaceable body 102 upon actuating first gear rack 106 and the second gear rack 107 into at least one engaging configuration. The carrier element 114 is configured to push at least part of the displaceable body 102 downwards in case a substantially vertical force is applied to the at least one pedal 109a, such that contact between the rollers 110 and the guiding rail 101 can be released or at least reduced. The device 100 further comprises a contact element 115 configured to create contact between at least part of the displaceable body 102 and the at least one guiding rail 101. It can be seen that the handle 108 of the secondary actuating element 105 is positioned at a distance from the upper surface of the displaceable body 102.

It will be clear that the invention is not limited to the exemplary embodiments which are illustrated and described here, but that countless variants are possible within the framework of the attached claims, which will be obvious to the person skilled in the art. In this case, it is conceivable for different inventive concepts and/or technical measures of the above-described variant embodiments to be completely or partly combined without departing from the inventive idea described in the attached claims.

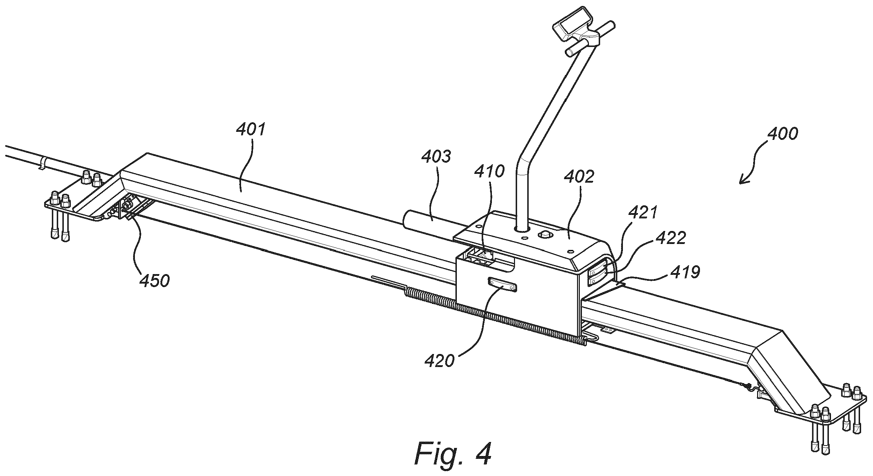

Figure 4 depicts a schematic representation of an embodiment of a vehicle blocking device 400. The displaceable body 402 comprises at least at least one removal member 419. In this embodiment, said removal member 419 is formed by a scraping element. The removal members are mounted to a rear side of the displaceable body 402 and a front side of the displaceable body 402. The removal members are facing towards an upper side of the guiding rail 401. The removal member is at least partially substantially parallel to the guiding rail 401. An end part of the removal member is bevelled shaped. This allows that dirt can be easily removed sidewards from the guiding rail 401. The removal member is at least partially made from PVC. The removal member 419 allows to remove dirt, like dust, sand or mud, from the guiding rail. This may prevent the dirt to enter the displaceable body 402, such that damages to the roller 410, such as a bearing, and/or the interior of the displaceable body 402 can be prevented. This allows to protect the displaceable body 402 and the roller 410 such that the life time of the displaceable body and the roller 410 may increase. The displaceable body 402 is further provided with at least one visibility light 420 configured for providing light during actuation of the at least one blocking element 403 between at least one blocking position and at least one unblocked position. The visibility light 420 is controlled by a, preferably the aforementioned, control unit 450. The visibility light 420 contributes to increase the visibility of the vehicle blocking device 100 during actuation of the blocking element 403, such that an operator may clearly see the object, in particular the part of the vehicle, to be blocked. The displaceable body 402 further comprise at least one, preferably two, status light 421, 422 for indicating a status of the vehicle blocking device towards a user, such as a vehicle driver, in particular by indicating when the vehicle blocking device 400 is blocked such that driving with the blocked vehicle is not allowed, and also by indicating when the vehicle blocking device 400, in particular the blocking element 403, is in an unblocked position, such that a vehicle can park near the dock, and also by indicating when a user can actuate the blocking element 403 from a blocked position to a unblocked position such that the vehicle can be driven away from the dock. The status light 421, 422 can be controlled by the control unit 450. Said status light 421, 422 contributes to the ease of use, time efficiency of the vehicle blocking device.

The verb 'comprise' and its conjugations as used in this patent document are understood to mean not only 'comprise', but to also include the expressions 'contain', 'substantially contain', 'formed by' and conjugations thereof.

## Claims

1. Vehicle blocking device (100, 400), comprising:
- at least one guiding rail (101, 401);
- at least one displaceable body (102, 402) which is displaceable with respect to the at least one guiding rail (101, 401); and
- at least one displaceable blocking element (103) configured for blocking at least part of a vehicle, engaged to the at least one displaceable body (102, 402);
wherein the at least one guiding rail (101, 401) and the at least one displaceable body respectively comprise at least one first gear rack (106) and at least one second gear rack (107) which are configured for mutual engagement and in particular for mutual interlocking such that the at least one displaceable body (102, 402) can be locked with respect to the at least one guiding rail (101, 401) in at least one position;
wherein the device comprises at least one primary actuating element (104) configured to actuate at least one first gear rack (106) and/or at least one second gear rack (107) between:
∘ at least one engaging configuration wherein the at least one first gear rack and the at least one second gear rack mutually engage such that the position of the at least one displaceable body is substantially locked with respect to the at least one guiding rail (101, 401); and
∘ at least one distant configuration wherein the at least one first gear rack (106) and the at least one second gear rack (107) are positioned at a distance from each other such that the at least one displaceable body (102, 402) can be displaced with respect to the at least one guiding rail (101, 401);
and wherein the device comprises at least one secondary actuating element (105) configured to actuate the at least one blocking element (103) between:
∘ at least one blocking position wherein the at least one blocking element extends substantially perpendicular with respect to the guiding rail (101, 401) such that the blocking element can block at least part of a vehicle; and
∘ at least one unblocked position;
**characterized in that** at least one primary actuating element (104) and at least one secondary actuating element (105) are independently controllable.

2. Vehicle blocking device (100, 400) according to claim 1, wherein at least one first gear rack (106) and/or at least one second gear rack (107) are configured to linearly displace between at least one engaging configuration and at least one distant configuration.

3. Vehicle blocking device (100, 400) according to any of the preceding claims, wherein at least one first gear rack (106) and/or at least one second gear rack (107) is configured for linear displacement in a substantially horizontal direction between at least one engaging configuration and at least one distant configuration.

4. Vehicle blocking device (100, 400) according to any of the preceding claims, wherein at least one first gear rack (106) and at least one second gear rack (107) extend in a substantially horizontal orientation in at least one engaging configuration and at least one distant configuration.

5. Vehicle blocking device (100, 400) according to any of the preceding claims, wherein at least one first gear rack (106) is located at a lower side of the at least one guiding rail (101, 401) and/or wherein at least second gear rack (107) is substantially enclosed by at least part of the at least one displaceable body (102, 402) and/or wherein the at least one displaceable body at least partially encloses the at least one guiding rail (101, 401) and/or wherein at least one primary actuating element (104) is a manually actuatable actuating element.

6. Vehicle blocking device (100, 400) according to any of the preceding claims, wherein the vehicle blocking device, and in particular at least one primary actuating element (104) comprises at least one retainer (118) configured to retain at least part of the at least one primary actuating element with respect to at least one first gear rack (106) and/or at least one second gear rack (107) in the engaging configuration and optionally wherein the vehicle blocking device, and in particular at least one primary actuating element (104) comprises at least one drive (117), in particular at least one solenoid, to activate and/or deactivate the at least one retainer (118).

7. Vehicle blocking device (100, 400) according to any of the preceding claims, wherein at least one primary actuating element (104) comprises at least one actuating member which is pivotably connected to at least one second gear rack (107).

8. Vehicle blocking device (100, 400) according to any of the preceding claims, comprising at least one locking member (112) configured to lock at least one first gear rack (106) and at least one second gear rack (107) in at least one engaging configuration, wherein at least one locking member is preferably a spring actuatable locking member.

9. Vehicle blocking device (100, 400) according to any of the preceding claims, comprising at least one unlocking member (113) configured to unlock at least one first gear rack (106) and at least one second gear rack (107) from at least one engaging configuration into at least one distant configuration, wherein at least one unlocking member is preferably a spring actuatable locking member.

10. Vehicle blocking device (100, 400) according to any of the preceding claims, wherein at least one primary actuating element (104) comprises at least one pedal (109a, 109b).

11. Vehicle blocking device (100, 400) according to any of the preceding claims, wherein the at least one displaceable body (102, 402) comprises at least one roller (110, 410), preferably at least one pair of rollers, for displacing the at least one displaceable body with respect to the at least one guiding rail (101, 401), wherein at least one roller (110, 410), preferably at least one pair of rollers, is preferably retractably connected to the at least one displaceable body (102, 402).

12. Vehicle blocking device (100, 400) according to any of the preceding claims, wherein at least one primary actuating element (104), and in particular at least one locking member (112), comprises at least one carrier element (114) configured to lift or lower at least part of the at least one displaceable body (102, 402) upon actuating at least one first gear rack (106) and at least one second gear rack (107) into at least one engaging configuration.

13. Vehicle blocking device (100, 400) according to any of the preceding claims, wherein at least one first gear rack (106) and/or at least one second gear rack (107) comprises a plurality of teeth, wherein at least one side of at least one teeth and in particular of all teeth comprises a beveled shape.

14. Vehicle blocking device (100, 400) according to any of the preceding claims, wherein at least one secondary actuating element (105) is a manually actuatable actuating element and/or wherein at least one secondary actuating element (105) comprises at least one handle (108).

15. Vehicle blocking device (100, 400) according to any of the preceding claims, wherein at least one blocking element (103) is rotatably connected and/or engaged to the at least one displaceable body (102, 402).

## Patentansprüche

1. Fahrzeugsperrvorrichtung (100, 400), umfassend:
- mindestens eine Führungsschiene (101, 401);
- mindestens einen verschiebbaren Körper (102, 402), der in Bezug auf die mindestens eine Führungsschiene (101, 401) verschiebbar ist; und
- mindestens ein verschiebbares Sperrelement (103), das dazu ausgebildet ist, zumindest einen Teil eines Fahrzeugs zu sperren, und das mit dem mindestens einen verschiebbaren Körper (102, 402) in Eingriff steht;
wobei die mindestens eine Führungsschiene (101, 401) und der mindestens eine verschiebbare Körper jeweils mindestens eine erste Zahnstange (106) und mindestens eine zweite Zahnstange (107) umfassen, die zum gegenseitigen Eingriff und insbesondere zum gegenseitigen Ineinandergreifen ausgebildet sind, derart, dass der mindestens eine verschiebbare Körper (102, 402) in Bezug auf die mindestens eine Führungsschiene (101, 401) in mindestens einer Stellung arretiert werden kann;
wobei die Vorrichtung mindestens ein primäres Betätigungselement (104) umfasst, das dazu ausgebildet ist, mindestens eine erste Zahnstange (106) und/oder mindestens eine zweite Zahnstange (107) zwischen den folgenden Konfigurationen zu betätigen:
∘ mindestens einer Eingriffskonfiguration, in der die mindestens eine erste Zahnstange und die mindestens eine zweite Zahnstange derart in gegenseitigen Eingriff gelangen, dass die Stellung des mindestens einen verschiebbaren Körpers in Bezug auf die mindestens eine Führungsschiene (101, 401) im Wesentlichen arretiert ist; und
∘ mindestens einer beabstandeten Konfiguration, in der die mindestens eine erste Zahnstange (106) und die mindestens eine zweite Zahnstange (107) in einem Abstand voneinander angeordnet sind, derart, dass der mindestens eine verschiebbare Körper (102, 402) in Bezug auf die mindestens eine Führungsschiene (101, 401) verschoben werden kann;
und wobei die Vorrichtung mindestens ein sekundäres Betätigungselement (105) umfasst, das dazu ausgebildet ist, das mindestens eine Sperrelement (103) zwischen den folgenden Stellungen zu betätigen:
∘ mindestens einer Sperrstellung, in der sich das mindestens eine Sperrelement im Wesentlichen senkrecht in Bezug auf die Führungsschiene (101, 401) erstreckt, derart, dass das Sperrelement zumindest einen Teil eines Fahrzeugs sperren kann; und
∘ mindestens einer entsperrten Stellung;
**dadurch gekennzeichnet, dass** mindestens ein primäres Betätigungselement (104) und mindestens ein sekundäres Betätigungselement (105) unabhängig voneinander steuerbar sind.

2. Fahrzeugsperrvorrichtung (100, 400) nach Anspruch 1, wobei mindestens eine erste Zahnstange (106) und/oder mindestens eine zweite Zahnstange (107) dazu ausgebildet sind, sich linear zwischen mindestens einer Eingriffskonfiguration und mindestens einer beabstandeten Konfiguration zu verschieben.

3. Fahrzeugsperrvorrichtung (100, 400) nach einem der vorhergehenden Ansprüche, wobei mindestens eine erste Zahnstange (106) und/oder mindestens eine zweite Zahnstange (107) für eine lineare Verschiebung in einer im Wesentlichen horizontalen Richtung zwischen mindestens einer Eingriffskonfiguration und mindestens einer beabstandeten Konfiguration ausgebildet ist.

4. Fahrzeugsperrvorrichtung (100, 400) nach einem der vorhergehenden Ansprüche, wobei sich mindestens eine erste Zahnstange (106) und mindestens eine zweite Zahnstange (107) in mindestens einer Eingriffskonfiguration und mindestens einer beabstandeten Konfiguration in einer im Wesentlichen horizontalen Ausrichtung erstrecken.

5. Fahrzeugsperrvorrichtung (100, 400) nach einem der vorhergehenden Ansprüche, wobei mindestens eine erste Zahnstange (106) an einer Unterseite der mindestens einen Führungsschiene (101, 401) angeordnet ist und/oder wobei mindestens eine zweite Zahnstange (107) im Wesentlichen von zumindest einem Teil des mindestens einen verschiebbaren Körpers (102, 402) umschlossen ist und/oder wobei der mindestens eine verschiebbare Körper die mindestens eine Führungsschiene (101, 401) zumindest teilweise umschließt und/oder wobei mindestens ein primäres Betätigungselement (104) ein manuell betätigbares Betätigungselement ist.

6. Fahrzeugsperrvorrichtung (100, 400) nach einem der vorhergehenden Ansprüche, wobei die Fahrzeugsperrvorrichtung, und insbesondere mindestens ein primäres Betätigungselement (104), mindestens ein Rückhalteelement (118) umfasst, das dazu ausgebildet ist, zumindest einen Teil des mindestens einen primären Betätigungselements in Bezug auf mindestens eine erste Zahnstange (106) und/oder mindestens eine zweite Zahnstange (107) in der Eingriffskonfiguration zurückzuhalten, und optional wobei die Fahrzeugsperrvorrichtung, und insbesondere mindestens ein primäres Betätigungselement (104), mindestens einen Antrieb (117), insbesondere mindestens einen Elektromagneten, umfasst, um das mindestens eine Rückhalteelement (118) zu aktivieren und/oder zu deaktivieren.

7. Fahrzeugsperrvorrichtung (100, 400) nach einem der vorhergehenden Ansprüche, wobei mindestens ein primäres Betätigungselement (104) mindestens ein Betätigungsglied umfasst, das schwenkbar mit mindestens einer zweiten Zahnstange (107) verbunden ist.

8. Fahrzeugsperrvorrichtung (100, 400) nach einem der vorhergehenden Ansprüche, umfassend mindestens ein Verriegelungsglied (112), das dazu ausgebildet ist, mindestens eine erste Zahnstange (106) und mindestens eine zweite Zahnstange (107) in mindestens einer Eingriffskonfiguration zu verriegeln, wobei das mindestens eine Verriegelungsglied vorzugsweise ein federbetätigbares Verriegelungsglied ist.

9. Fahrzeugsperrvorrichtung (100, 400) nach einem der vorhergehenden Ansprüche, umfassend mindestens ein Entriegelungsglied (113), das dazu ausgebildet ist, mindestens eine erste Zahnstange (106) und mindestens eine zweite Zahnstange (107) aus mindestens einer Eingriffskonfiguration in mindestens eine beabstandete Konfiguration zu entriegeln, wobei das mindestens eine Entriegelungsglied vorzugsweise ein federbetätigbares Verriegelungsglied ist.

10. Fahrzeugsperrvorrichtung (100, 400) nach einem der vorhergehenden Ansprüche, wobei mindestens ein primäres Betätigungselement (104) mindestens ein Pedal (109a, 109b) umfasst.

11. Fahrzeugsperrvorrichtung (100, 400) nach einem der vorhergehenden Ansprüche, wobei der mindestens eine verschiebbare Körper (102, 402) mindestens eine Rolle (110, 410), vorzugsweise mindestens ein Rollenpaar, zum Verschieben des mindestens einen verschiebbaren Körpers in Bezug auf die mindestens eine Führungsschiene (101, 401) umfasst, wobei mindestens eine Rolle (110, 410), vorzugsweise mindestens ein Rollenpaar, vorzugsweise einziehbar mit dem mindestens einen verschiebbaren Körper (102, 402) verbunden ist.

12. Fahrzeugsperrvorrichtung (100, 400) nach einem der vorhergehenden Ansprüche, wobei mindestens ein primäres Betätigungselement (104), und insbesondere mindestens ein Verriegelungsglied (112), mindestens ein Trägerelement (114) umfasst, das dazu ausgebildet ist, zumindest einen Teil des mindestens einen verschiebbaren Körpers (102, 402) beim Betätigen mindestens einer ersten Zahnstange (106) und mindestens einer zweiten Zahnstange (107) in mindestens eine Eingriffskonfiguration anzuheben oder abzusenken.

13. Fahrzeugsperrvorrichtung (100, 400) nach einem der vorhergehenden Ansprüche, wobei mindestens eine erste Zahnstange (106) und/oder mindestens eine zweite Zahnstange (107) eine Vielzahl von Zähnen umfasst, wobei mindestens eine Seite mindestens eines Zahns und insbesondere aller Zähne eine abgeschrägte Form aufweist.

14. Fahrzeugsperrvorrichtung (100, 400) nach einem der vorhergehenden Ansprüche, wobei mindestens ein sekundäres Betätigungselement (105) ein manuell betätigbares Betätigungselement ist und/oder wobei mindestens ein sekundäres Betätigungselement (105) mindestens einen Handgriff (108) umfasst.

15. Fahrzeugsperrvorrichtung (100, 400) nach einem der vorhergehenden Ansprüche, wobei mindestens ein Sperrelement (103) drehbar mit dem mindestens einen verschiebbaren Körper (102, 402) verbunden und/oder in Eingriff steht.

## Revendications

1. Dispositif de blocage de véhicule (100, 400), comprenant :
- au moins un rail de guidage (101, 401) ;
- au moins un corps déplaçable (102, 402) qui est déplaçable par rapport à l'au moins un rail de guidage (101, 401) ; et
- au moins un élément de blocage déplaçable (103) configuré pour bloquer au moins une partie d'un véhicule, en prise avec l'au moins un corps déplaçable (102, 402) ;
dans lequel l'au moins un rail de guidage (101, 401) et l'au moins un corps déplaçable comprennent respectivement au moins une première crémaillère (106) et au moins une deuxième crémaillère (107) qui sont configurées pour une mise en prise mutuelle et en particulier pour un interverrouillage mutuel de telle sorte que l'au moins un corps déplaçable (102, 402) peut être verrouillé par rapport à l'au moins un rail de guidage (101, 401) dans au moins une position ;
dans lequel le dispositif comprend au moins un élément d'actionnement primaire (104) configuré pour actionner au moins une première crémaillère (106) et/ou au moins une deuxième crémaillère (107) entre :
∘ au moins une configuration de mise en prise dans laquelle l'au moins une première crémaillère et l'au moins une deuxième crémaillère viennent mutuellement en prise de telle sorte que la position de l'au moins un corps déplaçable est sensiblement verrouillée par rapport à l'au moins un rail de guidage (101, 401) ; et
∘ au moins une configuration éloignée dans laquelle l'au moins une première crémaillère (106) et l'au moins une deuxième crémaillère (107) sont positionnées à distance l'une de l'autre de telle sorte que l'au moins un corps déplaçable (102, 402) peut être déplacé par rapport à l'au moins un rail de guidage (101, 401) ;
et dans lequel le dispositif comprend au moins un élément d'actionnement secondaire (105) configuré pour actionner l'au moins un élément de blocage (103) entre :
∘ au moins une position de blocage dans laquelle l'au moins un élément de blocage s'étend sensiblement perpendiculairement par rapport au rail de guidage (101, 401) de telle sorte que l'élément de blocage peut bloquer au moins une partie d'un véhicule ; et
∘ au moins une position débloquée ;
**caractérisé en ce que** au moins un élément d'actionnement primaire (104) et au moins un élément d'actionnement secondaire (105) sont commandables indépendamment l'un de l'autre.

2. Dispositif de blocage de véhicule (100, 400) selon la revendication 1, dans lequel au moins une première crémaillère (106) et/ou au moins une deuxième crémaillère (107) sont configurées pour se déplacer linéairement entre au moins une configuration de mise en prise et au moins une configuration éloignée.

3. Dispositif de blocage de véhicule (100, 400) selon l'une quelconque des revendications précédentes, dans lequel au moins une première crémaillère (106) et/ou au moins une deuxième crémaillère (107) est configurée pour un déplacement linéaire dans une direction sensiblement horizontale entre au moins une configuration de mise en prise et au moins une configuration éloignée.

4. Dispositif de blocage de véhicule (100, 400) selon l'une quelconque des revendications précédentes, dans lequel au moins une première crémaillère (106) et au moins une deuxième crémaillère (107) s'étendent selon une orientation sensiblement horizontale dans au moins une configuration de mise en prise et au moins une configuration éloignée.

5. Dispositif de blocage de véhicule (100, 400) selon l'une quelconque des revendications précédentes, dans lequel au moins une première crémaillère (106) est située sur un côté inférieur de l'au moins un rail de guidage (101, 401) et/ou dans lequel au moins une deuxième crémaillère (107) est sensiblement entourée par au moins une partie de l'au moins un corps déplaçable (102, 402) et/ou dans lequel l'au moins un corps déplaçable entoure au moins partiellement l'au moins un rail de guidage (101, 401) et/ou dans lequel au moins un élément d'actionnement primaire (104) est un élément d'actionnement actionnable manuellement.

6. Dispositif de blocage de véhicule (100, 400) selon l'une quelconque des revendications précédentes, dans lequel le dispositif de blocage de véhicule, et en particulier au moins un élément d'actionnement primaire (104), comprend au moins un élément de retenue (118) configuré pour retenir au moins une partie de l'au moins un élément d'actionnement primaire par rapport à au moins une première crémaillère (106) et/ou au moins une deuxième crémaillère (107) dans la configuration de mise en prise et éventuellement dans lequel le dispositif de blocage de véhicule, et en particulier au moins un élément d'actionnement primaire (104), comprend au moins un entraînement (117), en particulier au moins un solénoïde, pour activer et/ou désactiver l'au moins un élément de retenue (118).

7. Dispositif de blocage de véhicule (100, 400) selon l'une quelconque des revendications précédentes, dans lequel au moins un élément d'actionnement primaire (104) comprend au moins un organe d'actionnement qui est relié de manière pivotante à au moins une deuxième crémaillère (107).

8. Dispositif de blocage de véhicule (100, 400) selon l'une quelconque des revendications précédentes, comprenant au moins un organe de verrouillage (112) configuré pour verrouiller au moins une première crémaillère (106) et au moins une deuxième crémaillère (107) dans au moins une configuration de mise en prise, dans lequel au moins un organe de verrouillage est de préférence un organe de verrouillage actionnable par ressort.

9. Dispositif de blocage de véhicule (100, 400) selon l'une quelconque des revendications précédentes, comprenant au moins un organe de déverrouillage (113) configuré pour déverrouiller au moins une première crémaillère (106) et au moins une deuxième crémaillère (107) d'au moins une configuration de mise en prise vers au moins une configuration éloignée, dans lequel au moins un organe de déverrouillage est de préférence un organe de verrouillage actionnable par ressort.

10. Dispositif de blocage de véhicule (100, 400) selon l'une quelconque des revendications précédentes, dans lequel au moins un élément d'actionnement primaire (104) comprend au moins une pédale (109a, 109b).

11. Dispositif de blocage de véhicule (100, 400) selon l'une quelconque des revendications précédentes, dans lequel l'au moins un corps déplaçable (102, 402) comprend au moins un galet (110, 410), de préférence au moins une paire de galets, pour déplacer l'au moins un corps déplaçable par rapport à l'au moins un rail de guidage (101, 401), dans lequel au moins un galet (110, 410), de préférence au moins une paire de galets, est de préférence relié de manière rétractable à l'au moins un corps déplaçable (102, 402).

12. Dispositif de blocage de véhicule (100, 400) selon l'une quelconque des revendications précédentes, dans lequel au moins un élément d'actionnement primaire (104), et en particulier au moins un organe de verrouillage (112), comprend au moins un élément porteur (114) configuré pour soulever ou abaisser au moins une partie de l'au moins un corps déplaçable (102, 402) lors de l'actionnement d'au moins une première crémaillère (106) et d'au moins une deuxième crémaillère (107) dans au moins une configuration de mise en prise.

13. Dispositif de blocage de véhicule (100, 400) selon l'une quelconque des revendications précédentes, dans lequel au moins une première crémaillère (106) et/ou au moins une deuxième crémaillère (107) comprend une pluralité de dents, dans lequel au moins un côté d'au moins une dent et en particulier de toutes les dents présente une forme biseautée.

14. Dispositif de blocage de véhicule (100, 400) selon l'une quelconque des revendications précédentes, dans lequel au moins un élément d'actionnement secondaire (105) est un élément d'actionnement actionnable manuellement et/ou dans lequel au moins un élément d'actionnement secondaire (105) comprend au moins une poignée (108).

15. Dispositif de blocage de véhicule (100, 400) selon l'une quelconque des revendications précédentes, dans lequel au moins un élément de blocage (103) est relié de manière rotative et/ou en prise avec l'au moins un corps déplaçable (102, 402).
